# EUROPÄISCHE PATENTSCHRIFT

(11) **EP 2 729 336 B1**
(45) Veröffentlichungstag und Bekanntmachung des Hinweises auf die Patenterteilung: **25.11.2015**
(21) Anmeldenummer: 12727659.0
(22) Anmeldetag: 14.06.2012
(51) Int. Cl.: B60W 20/00, B60W 10/06, B60W 10/08, B60W 10/02, B60W 10/11, B60K 6/48

(54) **VERFAHREN ZUM BETREIBEN EINES HYBRIDANTRIEBSSTRANGS EINES FAHRZEUGS**
METHOD FOR OPERATING A HYBRID DRIVE TRAIN OF A VEHICLE
PROCÉDÉ DE FONCTIONNEMENT D'UNE CHAÎNE DE TRANSMISSION HYBRIDE D'UN VÉHICULE

(30) Priorität: 05.07.2011 DE 102011078670
(43) Veröffentlichungstag der Anmeldung: 14.05.2014
(73) Patentinhaber: ZF Friedrichshafen AG, 88038 Friedrichshafen (DE)
(72) Erfinder: ZÖLLNER, Tobias, 88131 Lindau (DE); FRITZER, Anton, 88677 Markdorf (DE); PETER, Patrick, 88079 Kressbronn (DE); LEMP, Thomas, 88085 Langenargen (DE); PFAU, Alexander, 88273 Fronreute (DE); GIERER, Stefan, 78467 Konstanz (DE)
(86) Internationale Anmeldenummer: PCT/EP2012/061311
(87) Internationale Veröffentlichungsnummer: WO 2013/004464

(56) Entgegenhaltungen:
- DE-A1-102004 023 673
- DE-A1-102006 026 601
- DE-A1-102007 001 424
- DE-A1-102007 055 832

## Beschreibung

Die Erfindung betrifft ein Verfahren zum Betreiben eines Hybridantriebsstrangs eines Fahrzeugs gemäß dem Oberbegriff des Patentanspruchs 1.

Bei einem Hybridfahrzeug ermöglicht eine im Kraftfluss des Antriebsstrangs parallele Anordnung eines Verbrennungsmotors und einer Elektromaschine neben einem gemischten Antrieb, bei dem sich die Antriebsmomente der beiden Antriebsaggregate überlagern, auch einen rein elektromotorischen oder rein verbrennungsmotorischen Fahrbetrieb. Die wechselnde Anbindung der Elektromaschine und des Verbrennungsmotors an ein Fahrzeuggetriebe wird bei einem solchen Parallelhybrid über Trennelemente realisiert, wobei meistens der Verbrennungsmotor über eine Trennkupplung mit der Elektromaschine antriebsverbindbar ist. Die Elektromaschine ist über eine zweite separate Kupplung, über getriebeinterne Schaltelemente oder über einen Drehmomentwandler mit dem Fahrzeuggetriebe bzw. dem Abtrieb antriebsverbindbar.

Bei einem Parallelhybrid-Antrieb kann im praktischen Fahrbetrieb abhängig von einer jeweiligen Hybrid-Betriebsstrategie die Antriebsform des Fahrzeuges zwischen einem verbrennungsmotorischen Antrieb, einem elektromotorischen Antrieb und einem gemischten Antrieb häufig wechseln. Im rein elektrischen Fahrbetrieb ist die Elektromaschine mit dem Abtrieb verbunden, während der Verbrennungsmotor über ein Trennelement vom Antriebsstrang abgekoppelt ist. Soll die Elektromaschine in dieser Situation als integrierter Startergenerator im elektromotorischen Betrieb den Verbrennungsmotor starten, so kann ein Schleppstart durchgeführt werden, bei dem der Verbrennungsmotor über das Trennelement wieder zugeschaltet bzw. auf seine Startdrehzahl beschleunigt wird.

Alternativ dazu kann bei Vorhandensein einer separaten Starteinrichtung für den Verbrennungsmotor ein externer Zustart durchgeführt werden, bei dem der Verbrennungsmotor unabhängig von der für elektromotorischen Betrieb vorhandenen Elektromaschine gestartet sowie auf eine Zieldrehzahl gebracht werden kann, und anschließend über ein zu schließendes Trennelement antriebswirksam in den Antriebsstrang eingebunden werden kann. Eine in zumindest einem Steuergerät des Fahrzeugs abgespeicherte Schaltstrategie für das Getriebe sowie eine Hybrid-Betriebsstrategie zum Betreiben des Verbrennungsmotors und der Elektromaschine können bei einem solchen Fahrzeug derart wirken, dass relativ häufig eine Schaltanforderung mit einer Motorstartanforderung zeitlich zusammenfällt.

Herkömmlich wird bei einer laufenden Getriebeschaltung, wenn eine Anforderung für einen Schleppstart oder Zustart erkannt wird, diese Schaltung zunächst zu Ende geführt, und dann auf die Aufforderung des Schleppstarts bzw. Zustarts reagiert, um den Verbrennungsmotor an die Eingangswelle des Getriebes anzukoppeln.

Um den zeitlichen Ablauf in solchen Situationen zu verkürzen und den Fahrkomfort sowie die Fahrdynamik zu verbessern, sind beispielsweise aus der DE 10 2007 055 828 A1 und der DE 10 2007 055 831 A1 bereits Verfahren bekannt, bei denen der Verbrennungsmotor auch während eines Gangwechsels gestartet wird.

Grundsätzlich kann der Start des Verbrennungsmotors sowohl während eines Übersetzungswechsels des Getriebes als auch außerhalb von Getriebeschaltvorgängen und, je nach Antriebsstrangkonfiguration und Getriebebauart, sowohl mit als auch ohne Zugkraftunterbrechung erfolgen. Allerdings wird dabei bisher nicht berücksichtigt, dass eine während des elektromotorischen Fahrens sinnvoll angeforderte Getriebeschaltung im hybridischen Fahren, also bei antriebswirksam in den Antriebsstrang eingekoppelten Verbrennungsmotor, möglicherweise gar nicht mehr nötig ist, da der Elektrofahrmodus und der Hybridfahrmodus üblicherweise nach unterschiedlichen Schaltkennlinien gesteuert werden. Dadurch kann es vorkommen, dass beispielsweise eine Hochschaltung im elektromotorischen Fahrbetrieb ausgelöst wird, dann der Zustart bzw. Schleppstart durchgeführt wird, und unmittelbar anschließend im verbrennungsmotorischen oder kombinierten Fahrbetrieb eine Rückschaltung erfolgt. Dies kann bei einem Fahrer des Fahrzeugs zu nicht plausibel nachvollziehbaren Fahrereignissen führen.

Starts des Verbrennungsmotors und Ankopplungen des Verbrennungsmotors an das Getriebe, die in unmittelbarem zeitlichen Zusammenhang mit Getriebeschaltungen stehen, können außerdem zu einem insgesamt relativ zeitaufwendigen Ablauf führen, der das Fahrverhalten beeinträchtigen kann. Dieses unerwünschte Verhalten kann bei Fahrzeugen mit automatischen Getrieben mit einer relativ hohen Gangzahl noch dadurch verstärkt werden, dass aus Verbrauchs- und/oder Leistungsgründen häufig aufeinander folgende Mehrfachschaltungen oder verschachtelte Schaltungen vorkommen, wie dies beispielsweise in der DE 10 2006 001 899 A1 und der DE 10 2006 026 601 A1 beschrieben ist.

Die Patentanmeldung DE 10 2007 001 424 A1 beschreibt ein Verfahren zum Starten eines Kolbenmotors eines Hybrid-Antriebes in einem Elektrofahrzustand, wobei der Hybrid-Antrieb zumindest den Kolbenmotor, einen Elektromotor, ein Getriebe sowie eine zwischen dem Kolbenmotor und dem Elektromotor angeordnete Kupplung umfasst. Vor dem Auslösen des Strartvorgangs wird eine Gangwechselsperre aktiviert, welche bei dem Getriebe einen Schaltvorgang, welcher den Startvorgang stören würde, verhindern soll. Nach dem Starten und Hochlaufen des Kolbenmotors und Schließen der Kupplung und einer Wandlerüberbrückungskupplung wird die Gangwechselsperre wieder deaktiviert.

Vor diesem Hintergrund liegt der Erfindung die Aufgabe zugrunde, ein Verfahren zum Betreiben eines Hybridantriebsstranges eines Fahrzeugs anzugeben, bei dem Schaltungen eines Fahrzeuggetriebes und Schleppstarts bzw. Zustarts eines Verbrennungsmotors besser als bisher koordiniert sind.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass es bei einem Hybridfahrzeug vorteilhaft ist, beim Vorliegen einer Anforderung nach einem Schleppstart oder einem Zustart des Verbrennungsmotors während der elektromotorischen Fahrt und bei einem gerade ablaufenden Schaltvorgang diesen soweit möglich und sinnvoll nicht auszuführen sowie den Schleppstart bzw. Zustart auszuführen, um für den Fahrer unlogisch erscheinende wechselnde Schaltungen infolge des Umschaltens zwischen dem elektromotorischen Fahren und einem verbrennungsmotorischen oder kombinierten Fahrbetrieb sowie den Fahrkomfort und die Fahrleistung beeinträchtigende mögliche lange Abläufe durch hintereinander gereihte Schaltung und Schleppstart bzw. Zustart zu vermeiden.

Demnach geht die Erfindung aus von einem Verfahren zum Betreiben eines Hybridantriebsstrangs eines Fahrzeugs, bei dem ein Verbrennungsmotor und eine Elektromaschine je nach Betriebssituation einzeln oder zusammen antriebswirksam auf ein Fahrzeuggetriebe mit schaltbaren Übersetzungen einwirken, wobei der Verbrennungsmotor und die Elektromaschine über ein steuerbares Trennelement miteinander koppelbar oder voneinander trennbar sind, und bei dem ausgehend von einer elektromotorischen Fahrt ein Schleppstart des Verbrennungsmotors mittels der Elektromaschine oder ein Zustart des Verbrennungsmotors mittels einer separaten Starteinrichtung erfolgt.

Zur Lösung der gestellten Aufgabe sieht die Erfindung vor, dass bei einem ablaufenden Schaltvorgang des Fahrzeuggetriebes und dem Vorliegen einer Anforderung nach einem Schleppstart oder einem Zustart des Verbrennungsmotors in Abhängigkeit davon, ob der Schaltvorgang ein Hochschaltvorgang, ein Rückschaltvorgang, ein Zugschaltvorgang oder ein Schubschaltvorgang ist, sowie abhängig von der Art des angeforderten Starts des Verbrennungsmotors zunächst eine Prüfung dahingehend erfolgt, ob der Schaltvorgang ausgeführt, zumindest teilweise ausgeführt oder abgebrochen werden soll bevor der Schleppstart oder der Zustart durchgeführt wird, und dass Abhängig von dem Ergebnis dieser Prüfung entsprechende notwendige Maßnahmen zur Weiterführung, zur zumindest teilweisen Ausführung oder zum Abbruch des Schaltvorgangs eingeleitet werden.

Unter einem Schleppstart wird ein Start eines Verbrennungsmotors über eine elektrische Fahrmaschine eines Hybridantriebsstranges und die Anbindung des Verbrennungsmotors an den Antriebsstrang verstanden. Unter einem Zustart wird ein Start des Verbrennungsmotors über eine separate Starteinrichtung verstanden, wobei der Verbrennungsmotor für den Startvorgang zunächst vom Antriebsstrang abgekoppelt ist und anschließend an den Antriebsstrang antriebswirksam angebunden wird. Eine separate Starteinrichtung kann beispielsweise ein konventioneller Startermotor sein.

Unter einem Schaltvorgang wird eine mittels Schaltelementen des Fahrzeuggetriebes durchgeführte Schaltung zum Zwecke eines Wechsel einer Getriebeübersetzung verstanden, wobei der Schaltvorgang aus einer Einfachschaltung oder aus mehreren zusammengehörigen, aufeinander folgenden oder durch eine bestimmte Abfolge von Schaltelementbetätigungen miteinander verschachtelten Einzelschaltungen bestehen kann.

Demnach beschreibt das Verfahren eine Steuerungslogik für ein Hybridfahrzeug, die situationsgerecht entscheidet, ob bei einer elektromotorischen Fahrt eine laufende Getriebeschaltung weitergeführt, teilweise abgebrochen oder ganz abgebrochen werden soll, bevor mit einem angeforderten Schleppstart oder Zustart des Verbrennungsmotors begonnen wird. Dadurch können unnötige und für den Fahrer nicht nachvollziehbare Hoch- und Rückschaltungen in Folge eines Wechsels zwischen elektrischem, verbrennungsmotorischem oder kombiniertem Fahrbetrieb vermieden werden. Zudem werden Hintereinanderreihungen von Schaltungen und Schleppstart bzw. Zustart, die sich durch relativ lange zeitliche Abläufe auf den Fahrerwunsch nach Fahrdynamik und Fahrkomfort ungünstig auswirken können, weitgehend vermieden.

Bei dem Verfahren kann vorgesehen sein, dass bei bestimmten Schaltvorgängen und Startanforderungen zunächst eine Schaltverhinderungsanweisung aktiviert wird, beispielsweise durch eine entsprechende Steuerungsanweisung an eine Getriebesteuerung, und der angeforderte Schleppstart oder Zustart in seiner Ausführung zunächst verzögert wird. Bei einer dann folgenden Schaltverhinderungsprüfung wird die Durchführung eines Schaltabbruchs geprüft.

Der Schaltabbruch kann vorteilhaft dann erfolgen, wenn eine relevante aktuelle Getriebedrehzahl zumindest noch annähernd einer Synchrondrehzahl des aktuellen Ganges entspricht oder eine vorbestimmte Schaltphasengrenze noch nicht überschritten ist. In diesem Fall kann die Schaltung ohne zusätzlichen Steuerungsaufwand der Motor- und Getriebesteuerung und ohne Komforteinbußen im Fahrbetrieb abgebrochen und mit dem beabsichtigten Schleppstart bzw. Zustart begonnen werden.

Ist bei dem Schaltvorgang hingegen die Synchrondrehzahl des aktuellen Ganges bereits nicht mehr auch nur annähernd vorhanden, so dass ein Schaltabbruch bzw. eine Schaltrücknahme nicht mehr ohne weiteres möglich oder sinnvoll ist, wird die aktuelle Schaltung ausgeführt. Der Schleppstart bzw. Zustart kann in diesem Fall durchgeführt werden, sobald der neue Gang synchronisiert ist oder das Ende des Schließvorgangs der beteiligten Schaltelemente erreicht ist.

Ein anschließender Schleppstart kann durchgeführt werden, indem der Verbrennungsmotor mittels der motorisch betriebenen Elektromaschine über das geschlossene Trennelement zwischen Verbrennungsmotor und Elektromaschine aus dem Stillstand bis zu einer Drehzahl beschleunigt wird, bei welcher der Verbrennungsmotor zünden kann. Anschließend wird das Trennelement in Öffnungsrichtung betätigt, so dass der laufende Verbrennungsmotor seine vorbestimmte Zieldrehzahl ungehindert erreichen kann. Sobald diese Zieldrehzahl erreicht ist, wird der Verbrennungsmotor über das vollständig zu schließende Trennelement an den Antriebsstrang angebunden.

Ein anschließender Zustart kann durchgeführt werden, indem der Verbrennungsmotor über eine separate Starteinrichtung gestartet wird. Nach dem Start durch eine solche externe Zustarteinrichtung läuft der Verbrennungsmotor selbstständig auf seine vorbestimmte Zieldrehzahl. Sobald diese Zieldrehzahl erreicht ist, wird der Verbrennungsmotor über das nun zu schließende Trennelement an den Antriebsstrang antriebstechnisch angekoppelt.

Besteht der laufende Schaltvorgang aus mehreren aufeinanderfolgenden oder verschachtelten Einzelschaltungen, so kann die aktuelle Einzelschaltung ausgeführt werden, jedoch alle weiteren dem Schaltvorgang zugeordneten Schaltungen mittels der Schaltverhinderungssteuerung verhindert werden. Ein verschachtelter Schaltvorgang wird dabei, soweit dies möglich ist, nur noch im Umfang einer Einfachschaltung gesteuert. Dadurch kann eine möglicherweise unerwünschte Auswirkung des Schaltvorgangs auf den Fahrbetrieb infolge der Antriebsumschaltung auf ein Mindestmaß begrenzt werden.

Weiter kann vorgesehen sein, dass bei einem laufenden Hochschaltvorgang, der aus einer oder mehreren Hochschaltungen besteht, bei einer Anforderung eines Schleppstarts oder Zustarts des Verbrennungsmotors eine Schaltabbruchprüfung erfolgt.

Ebenso kann vorgesehen sein, dass bei einem laufenden Rückschaltvorgang, der aus einer oder mehreren Rückschaltungen besteht, bei einer Anforderung eines Schleppstarts des Verbrennungsmotors eine Schaltabbruchprüfung erfolgt.

Weiterhin kann vorgesehen sein, dass bei einem Fahrzeug mit einem in das Fahrzeuggetriebe integrierten Anfahrelement während eines laufenden Schaltvorgangs, der aus einer oder mehreren Schubrückschaltungen besteht, bei einer Anforderung eines Schleppstarts falls erforderlich das Fahrzeuggetriebe zunächst soweit herunter geschaltet wird, bis das im Getriebe integrierte Anfahrelement im geschalteten Gang aktiv beteiligt ist und geöffnet werden kann. Dies kann bei der Anbindung des Verbrennungsmotors an das Getriebe notwendig sein, wenn die Getriebeeingangsdrehzahl im Schubbetrieb kleiner wird als die Leerlaufdrehzahl des Verbrennungsmotors, um den Verbrennungsmotor nicht unter diese Leerlaufdrehzahl zu drücken.

Bei Hybridfahrzeugen mit einem hydrodynamischen Drehmomentwandler kann hingegen bei Schubbetrieb und bei Zugbetrieb wie bei den anderen Rückschaltvorgängen mit anschließendem Schleppstart verfahren werden.

Bei laufenden Schaltvorgängen, die aus einer oder mehreren Rückschaltungen bestehen, sind bei einer Anforderung eines Zustarts eine Schaltabbruchprüfung und eine Verzögerung des Zustarts für den Fahrbetrieb eher nicht zweckmäßig. Daher kann in diesen Fällen vorgesehen sein, dass ein Schaltvorgang und ein anschließender Zustart verzögerungsfrei ausgeführt werden.

Außerdem kann vorgesehen sein, dass bei einem laufenden Schaltvorgang, der aus einer oder mehreren Hochschaltungen besteht, bei einer Anforderung eines Zustarts bereits während der Prüfung des Schaltabbruchs der vom Antriebsstrang abgekoppelte Verbrennungsmotor über die separate Starteinrichtung gestartet wird. Dadurch kann der Zeitraum der Schaltabbruchprüfung genutzt werden, um den Wechsel zwischen der Startanforderung beim elektromotorischen Fahren hin zum verbrennungsmotorischen oder kombinierten Fahren zeitlich möglichst kurz zu halten.

Eine weitere zeitliche Verkürzung des Schleppstarts oder Zustarts ist dadurch erreichbar, dass bei einem laufenden Schaltvorgang bereits während der Prüfung des Schaltabbruchs ein als Trennkupplung ausgebildetes Trennelement mit einem Druckmittel befüllt und auf einen Berührpunkt voreingestellt wird. Der Berührpunkt markiert diejenige Stelle im Betätigungsweg des Trennmittels, ab dem dieses ein Drehmoment zu übertragen beginnt. Dadurch ist für den Startvorgang im Falle eines Schleppstarts bzw. für die Anbindung an den Antriebsstrang beim Schleppstart und beim Zustart ein schneller Kraftschluss zwischen dem Verbrennungsmotor und der Elektromaschine herstellbar.

Zur Verdeutlichung der Erfindung ist der Beschreibung eine Zeichnung eines Ausführungsbeispiels beigefügt. In dieser zeigt
- Fig. 1: schematisch einen Hybridantriebsstrang eines Kraftfahrzeugs, und
- Fig. 2: ein Flussdiagramm zur Durchführung eines Verfahrens zum Betreiben eines Hybridantriebsstrangs.

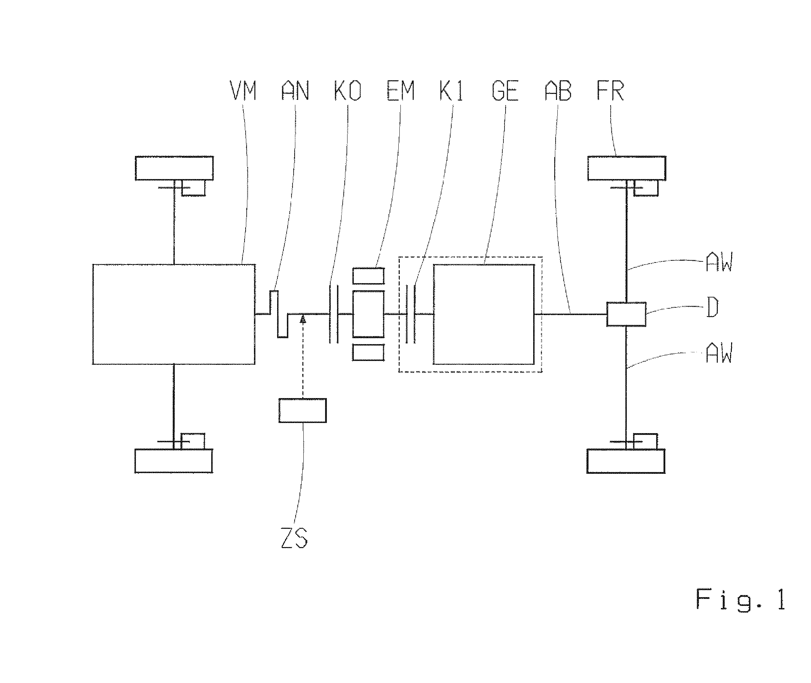

Demnach ist in Fig. 1 ein stark vereinfachtes Schema eines Hybridantriebs eines Kraftfahrzeugs dargestellt. Der Parallelhybrid-Antriebsstrang weist einen Verbrennungsmotor VM, eine Elektromaschine EM und ein automatisches oder automatisiertes Fahrzeuggetriebe GE zur Einstellung von Übersetzungen des Antriebs auf.

Der Verbrennungsmotor VM ist über ein erstes steuerbares Trennelement K0, beispielsweise eine hydraulisch betätigbare Reibkupplung, antriebstechnisch an den Antriebsstrang ankoppelbar bzw. von diesem abkoppelbar. Dazu ist eine Antriebswelle AN des Verbrennungsmotors VM über die Trennkupplung K0 mit der Elektromaschine EM bzw. deren Rotorwelle verbindbar. Die Elektromaschine EM ist über eine zweites Trennelement K1, das eine weitere Reibkupplung, ein Drehmomentwandler, ein getriebeinternes Schalt-/Anfahrelement oder dergleichen sein kann, mit dem Fahrzeuggetriebe GE antriebsverbindbar. Ein Antriebsmoment eines oder beider motorischen Antriebsaggregate VM, EM ist über das Getriebe GE an eine Abtriebswelle AB übertragbar. Die Abtriebswelle AB treibt über ein Differentialgetriebe D zwei zu Fahrzeugrädern FR führende Achsantriebswellen AW an.

Die Elektromaschine EM ist als eine Fahrmaschine ausgebildet, die abhängig vom Ladezustand eines nicht dargestellten elektrischen Energiespeichers ein rein elektrisches Fahren des Kraftfahrzeugs ermöglicht. Sie kann wechselweise motorisch oder generatorisch betrieben werden. Außerdem kann die Elektromaschine EM als eine elektromotorische Starteinrichtung zur Durchführung von Schleppstarts des Verbrennungsmotors VM ausgebildet sein. Es kann auch eine externe Starteinrichtung ZS zur Durchführung von Zustarts des Verbrennungsmotors VM unabhängig von der elektrischen Fahrmaschine EM vorgesehen sein, welche die Antriebswelle AN des Verbrennungsmotors VM antreiben kann. Die externe Starteinrichtung ZS kann beispielsweise ein elektrischer Startermotor sein.

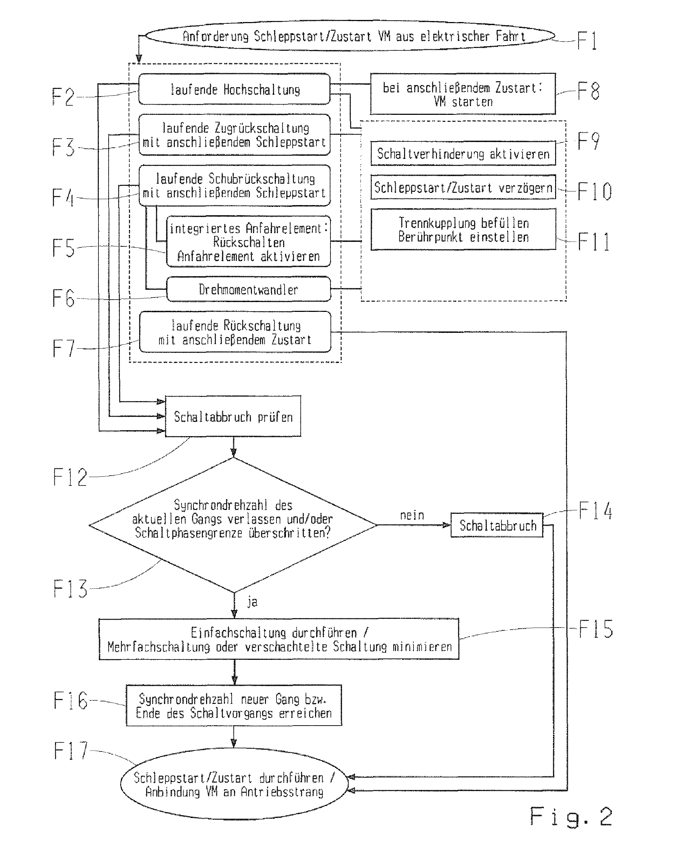

Die Durchführung eines Verfahrens zum Betreiben eines Hybridantriebsstrangs wird anhand des Flussdiagramms in Fig.2 näher erläutert, wobei die Anordnung in Fig. 1 zur Verdeutlichung des Verfahrens beispielhaft zu verstehen ist.

In Fig. 2 sind Funktionsblöcke F1 bis F17 dargestellt, die zur Beschreibung einer Steuerungslogik dienen, die situationsgerecht entscheidet, ob eine laufende Schaltung des Getriebes GE abgebrochen werden soll, bevor ein angeforderter Schleppstart oder Zustart des Verbrennungsmotors VM ausgeführt wird.

Demnach wird bei einer Anforderung F1 eines Schleppstarts oder Zustarts des Verbrennungsmotors VM bei einer laufenden Schaltung des Getriebes GE zum Wechsel des Ganges bzw. der Übersetzung in Abhängigkeit von der Art des Schaltvorgangs verfahren.

Bei einem laufenden Hochschaltvorgang (F2) wird beim Vorliegen einer Anforderung nach einem Schleppstart oder Zustart eine Schaltverhinderungsanweisung (F9) an eine nicht näher beschriebene Getriebesteuerung übermittelt. Gleichzeitig erfolgt, solange der Schaltvorgang noch läuft bzw. noch nicht abgebrochen ist, längstens jedoch bis die Synchronisation des neuen Ganges oder das Ende der Schaltung erreicht ist (F16), eine Verzögerung des Schleppstarts oder Zustarts (F10). Während die Schaltung noch aktiv ist, kann der Druckraum der Trennkupplung KO mit Druckmittel bzw. Hydrauliköl befüllt und auf einen vorgegebenen oder vorbestimmten Berührpunkt eingestellt werden (F11).

Besitzt das Fahrzeug eine Zustarteinrichtung ZS und wurde ein Zustart (F8) angefordert, so kann darüber hinaus der Verbrennungsmotor VM schon mittels der externen Zustarteinrichtung ZS gestartet werden. Der Verbrennungsmotor VM bleibt antriebstechnisch zunächst jedoch noch vom Antriebsstrang abgekoppelt.

Durch die Schaltverhinderungsanweisung (F9) wird geprüft, ob die laufende Schaltung abgebrochen werden kann (F12). Solange bei der Schaltung die Synchronisationsdrehzahl des aktuellen Gangs noch nicht verlassen wurde oder ein vorbestimmter Grenzwert der Schaltphase noch nicht überschritten ist, kann diese Schaltung abgebrochen werden (F13). Ist dies der Fall, wird die Schaltung abgebrochen bzw. zurückgenommen (F14) und der Schleppstart bzw. Zustart durchgeführt (F17). Der vorbestimmte Grenzwert der Schaltphase kann beispielsweise ein Zeitraum oder eine Drehzahl sein.

Kann die aktuelle Schaltung nicht mehr abgebrochen werden, so wird diese eine Schaltung noch durchgeführt (F15). Ist der laufende Schaltvorgang eine Mehrfachschaltung aus mehreren aufeinanderfolgenden Einzelschaltungen, so werden alle nachfolgenden Schaltungen durch die aktivierte Schaltverhinderung (F9) unterbunden. Ist die begonnene Schaltung eine verschachtelte Schaltung und kann diese nicht mehr abgebrochen werden, so wird diese soweit es möglich ist in eine Einfachschaltung umgewandelt, jedoch ansonsten vollständig durchgeführt (F15). Sobald die Schaltung die Synchronisation des neuen Ganges erreicht hat, alternativ am Ende der Schaltung (F16), wird der Zustart bzw. Schleppstart durchgeführt (F17).

Bei einem Schleppstart wird die Trennkupplung KO in Schließrichtung betätigt, so dass der Verbrennungsmotor VM über die Elektromaschine EM bis zu einer Drehzahl beschleunigt wird, bei welcher der Verbrennungsmotor VM zünden kann. Anschließend wird die Trennkupplung KO in Öffnungsrichtung betätigt, so dass der gestartete Verbrennungsmotor VM ungehindert seine Zieldrehzahl für eine möglichst stoßfreie Anbindung an den Antriebsstrang erreichen kann. Sobald diese Zieldrehzahl erreicht ist, wird die Antriebswelle AN des Verbrennungsmotors VM durch Schließen der Trennkupplung KO an den Antriebsstrang angekoppelt.

Beim Zustart wird der Verbrennungsmotor VM über die externe Zustarteinrichtung ZS gestartet und beschleunigt selbstständig, also verbrennungsmotorisch, bis zum Erreichen seiner Zieldrehzahl. Sobald diese Zieldrehzahl erreicht ist, wird die Antriebswelle AN des Verbrennungsmotors VM durch Schließen der Trennkupplung KO an den Antriebsstrang angekoppelt.

Bei einem ablaufenden Rückschaltvorgang im Zugbetrieb mit anschließendem Schleppstart (F3) wird analog wie beim Hochschaltvorgang verfahren.

Bei einem ablaufenden Rückschaltvorgang im Schubbetrieb mit anschließendem Schleppstart (F4) hängt das weitere Verfahren von der Bauweise des Antriebsstranges ab:
Bei Hybridfahrzeugen, bei denen das Trennelement K1 zwischen der Elektromaschine EM und dem Getriebe GE als ein in das Getriebe GE integriertes Anfahrelement K1 ausgebildet ist, das auch für Schaltungen verwendet wird, beispielsweise eine getriebeinterne Schaltkupplung, erfolgt erforderlichenfalls eine Öffnung des integrierten Anfahrelementes K1, wenn die aktuelle Eingangsdrehzahl des Getriebes GE kleiner als die vorgegebene Leerlaufdrehzahl des Verbrennungsmotors VM ist, um diesen nicht unter die Leelaufdrehzahl zu drücken (F5). Dazu ist gegebenenfalls zunächst ein Schubrückschalten des Getriebes GE erforderlich, bis ein Gang erreicht ist, an dem das integrierte Anfahrelement K1 aktiv beteiligt ist. Erst anschließend kann die Schaltverhinderung (F9) aktiviert und mit dem Schleppstart begonnen werden.

Bei Hybridfahrzeugen mit einem hydrodynamischen Drehmomentwandler als zweitem Trennelement K1 bzw. Anfahrelement (F6) wird hingegen wie bei Zugrückschaltungen verfahren.

Bei einem ablaufenden Rückschaltvorgang im Zugbetrieb oder Schubbetrieb mit anschließendem Zustart (F7) wird die Schaltverhinderung nicht aktiviert, und somit der Rückschaltvorgang sofort durchgeführt. Gleichzeitig wird auch der angeforderte Zustart nicht verzögert, sondern sofort durchgeführt (F17).

### Bezugszeichenliste

- AB: Abtriebswelle
- AN: Antriebswelle
- AW: Achsantriebswelle
- D: Differentialgetriebe
- EM: Elektromaschine
- F1 - F17: Funktionsblöcke
- FR: Fahrzeugrad
- GE: Fahrzeuggetriebe
- K0: erstes Trennelement
- K1: zweites Trennelement
- VM: Verbrennungsmotor
- ZS: Zusatzstarteinrichtung

## Patentansprüche

1. Verfahren zum Betreiben eines Hybridantriebsstrangs eines Fahrzeugs, bei dem ein Verbrennungsmotor (VM) und eine Elektromaschine (EM) je nach Betriebssituation einzeln oder zusammen antriebswirksam auf ein Fahrzeuggetriebe (GE) mit schaltbaren Übersetzungen einwirken, wobei der Verbrennungsmotor (VM) und die Elektromaschine (EM) über ein steuerbares Trennelement (K0) miteinander koppelbar oder voneinander trennbar sind, und bei dem ausgehend von einer elektromotorischen Fahrt ein Schleppstart des Verbrennungsmotors (VM) mittels der Elektromaschine (EM) oder ein Zustart des Verbrennungsmotors (VM) mittels einer separaten Starteinrichtung (ZS) erfolgt, **dadurch gekennzeichnet, dass** bei einem ablaufenden Schaltvorgang des Fahrzeuggetriebes (GE) und dem Vorliegen einer Anforderung nach einem Schleppstart oder einem Zustart des Verbrennungsmotors (VM) in Abhängigkeit davon, ob der Schaltvorgang ein Hochschaltvorgang, ein Rückschaltvorgang, ein Zugschaltvorgang oder ein Schubschaltvorgang ist, sowie abhängig von der Art des angeforderten Starts des Verbrennungsmotors (VM) zunächst eine Prüfung dahingehend erfolgt, ob der Schaltvorgang ausgeführt, zumindest teilweise ausgeführt oder abgebrochen werden soll bevor der Schleppstart oder der Zustart durchgeführt wird, und dass abhängig von dem Ergebnis dieser Prüfung entsprechende notwendige Maßnahmen zur Weiterführung, zur zumindest teilweisen Ausführung oder zum Abbruch des Schaltvorgangs eingeleitet werden.

2. Verfahren nach Anspruch 1, **dadurch gekennzeichnet, dass** bei bestimmten Schaltvorgängen sowie Startanforderungen zunächst eine Schaltverhinderungsanweisung aktiviert und der angeforderte Schleppstart oder Zustart des Verbrennungsmotors in seiner Ausführung verzögert wird.

3. Verfahren nach Anspruch 1 oder 2, **dadurch gekennzeichnet, dass** der Schaltabbruch dann erfolgt, wenn eine relevante aktuelle Getriebedrehzahl zumindest noch annähernd einer Synchrondrehzahl des aktuellen Ganges entspricht oder eine applizierbare Schaltphasengrenze noch nicht überschritten ist.

4. Verfahren nach einem der Ansprüche 1 bis 3, **dadurch gekennzeichnet, dass** bei einem aus mehreren aufeinanderfolgenden oder verschachtelten Einzelschaltungen bestehenden und gerade ablaufenden Schaltvorgang dann, wenn die Prüfung ergibt, dass ein kompletter Schaltabbruch nicht möglich ist, die aktuelle Einzelschaltung durchgeführt wird und alle weiteren diesem Schaltvorgang zugeordneten Schaltungen verhindert werden.

5. Verfahren nach einem der Ansprüche 1 bis 4, **dadurch gekennzeichnet, dass** bei einem laufenden Hochschaltvorgang, der aus einer oder mehreren Hochschaltungen besteht, bei einer Anforderung eines Schleppstarts oder Zustarts des Verbrennungsmotors eine Schaltabbruchprüfung erfolgt.

6. Verfahren nach einem der Ansprüche 1 bis 4, **dadurch gekennzeichnet, dass** bei einem laufenden Rückschaltvorgang, der aus einer oder mehreren Rückschaltungen besteht, bei einer Anforderung eines Schleppstarts des Verbrennungsmotors eine Schaltabbruchprüfung erfolgt.

7. Verfahren nach einem der Ansprüche 1 bis 6, **dadurch gekennzeichnet, dass** bei einem Fahrzeug mit einem in das Fahrzeuggetriebe (GE) integrierten Anfahrelement (K1) bei einem laufenden Schaltvorgang, der aus einer oder mehreren Schubrückschaltungen besteht, bei einer Anforderung eines Schleppstarts das Fahrzeuggetriebe (GE) zunächst soweit heruntergeschaltet wird, bis das integrierte Anfahrelement (K1) im geschalteten Gang aktiv beteiligt ist.

8. Verfahren nach einem der Ansprüche 1 bis 7, **dadurch gekennzeichnet, dass** bei einem laufenden Schaltvorgang, der aus einer oder mehreren Rückschaltungen besteht, bei einer Anforderung eines Zustarts der Schaltvorgang und der anschließende Zustart verzögerungsfrei ausgeführt werden.

9. Verfahren nach einem der Ansprüche 1 bis 8, **dadurch gekennzeichnet, dass** bei einem laufenden Schaltvorgang, der aus einer oder mehreren Hochschaltungen besteht, bei einer Anforderung eines Zustarts bereits während der Prüfung des Schaltabbruchs der vom Antriebsstrang abgekoppelte Verbrennungsmotor (VM) über die separate Starteinrichtung (ZS) gestartet wird.

10. Verfahren nach einem der Ansprüche 1 bis 9, **dadurch gekennzeichnet, dass** bei einem laufenden Schaltvorgang bereits während der Prüfung des Schaltabbruchs ein als Trennkupplung ausgebildetes Trennelement (K0) zwischen der Elektromaschine (EM) und dem Verbrennungsmotor (VM) mit einem Druckmittel befüllt und auf einen Berührpunkt voreingestellt wird.

## Claims

1. Method for operating a hybrid drive train of a vehicle, in which an internal combustion engine (VM) and an electrical motor (EM) act effectively in terms of drive individually or together, depending on the operating situation, on a vehicle transmission (GE) with switchable transmission ratios, wherein the internal combustion engine (VM) and the electrical motor (EM) are couplable to each other or are separable from each other via a controllable separating element (K0), and in which, starting from travel using an electrical motor, a towed starting of the internal combustion engine (VM) by means of the electrical motor (EM) or starting of the internal combustion engine (VM) by means of a separate starting device (ZS) takes place, **characterized in that**, while a shifting operation of the vehicle transmission (GE) is proceeding and there is a requirement for towed starting or starting of the internal combustion engine (VM), depending on whether the shifting operation is an upshifting operation, a downshifting operation, a traction shifting operation or an overrun shifting operation, and depending on the type of required starting of the internal combustion engine (VM), first of all a test takes place as to whether the shifting operation is intended to be executed, at least partially executed or terminated before the towed starting or the starting is carried out, and **in that**, depending on the result of said test, corresponding necessary measures for the continuation, for the at least partial execution or for the termination of the shifting operation are initiated.

2. Method according to Claim 1, **characterized in that**, in the event of certain shifting operations and starting requirements, first of all a shifting prevention instruction is activated and the execution of the required towed starting or starting of the internal combustion engine is delayed.

3. Method according to Claim 1 or 2, **characterized in that** the shifting termination takes place whenever a relevant current transmission speed corresponds at least approximately to a synchronizing speed of the current gear or an applicable shifting phase limit is not yet exceeded.

4. Method according to one of Claims 1 to 3, **characterized in that**, in the event of a shifting operation which consists of a plurality of consecutive or interlaced individual gear shifts and is proceeding at the time, if the test reveals that a complete shifting termination is not possible, the current individual gear shift is carried out and all further gear shifts associated with the said shifting operation are prevented.

5. Method according to one of Claims 1 to 4, **characterized in that**, in the event of an ongoing upshifting operation which consists of one or more upshifts, when a towed start or starting of the internal combustion engine is required, a shifting termination test takes place.

6. Method according to one of Claims 1 to 4, **characterized in that**, in the event of an ongoing downshifting operation which consists of one or more downshifts, when a towed starting of the internal combustion engine is required a shifting termination test takes place.

7. Method according to one of Claims 1 to 6, **characterized in that**, in the case of a vehicle having a starting element (K1) integrated into the vehicle transmission (GE), in the event of an ongoing shifting operation which consists of one or more overrun downshifts, when a towed starting is required the vehicle transmission (GE) is first of all shifted into a lower gear until the integrated starting element (K1) is actively involved in the selected gear.

8. Method according to one of Claims 1 to 7, **characterized in that**, in the event of an ongoing shifting operation which consists of one or more downshifts, when starting is required the shifting operation and the subsequent starting are executed without delay.

9. Method according to one of Claims 1 to 8, **characterized in that**, in the event of an ongoing shifting operation which consists of one or more upshifts, when starting is required the internal combustion engine (VM), which is decoupled from the drive train, is already started via the separate starting device (ZS) during the shifting termination test.

10. Method according to one of Claims 1 to 9, **characterized in that**, in the event of an ongoing shifting operation, a separating element (KO), which is in the form of a separating clutch, between the electrical motor (EM) and the internal combustion engine (VM) is already filled with a pressure medium and preset to a contact point during the shifting termination test.

## Revendications

1. Procédé pour faire fonctionner une chaîne cinématique hybride d'un véhicule, selon lequel un moteur à combustion interne (VM) et une machine électrique (EM) interviennent individuellement ou collectivement, suivant la situation opérationnelle, sur une boîte de vitesses de véhicule (GE) ayant des rapports de démultiplication commutables, le moteur à combustion interne (VM) et la machine électrique (EM) pouvant être accouplés l'un à l'autre ou pouvant être séparés l'un de l'autre par le biais d'un élément de séparation (K0) commandable, et procédé selon lequel, en partant d'un déplacement électromotorisé, est effectué un démarrage entraîné du moteur à combustion interne (VM) au moyen de la machine électrique (EM) ou un démarrage lancé du moteur à combustion interne (VM) au moyen d'un dispositif de démarrage (ZS) séparé, **caractérisé en ce que** lors d'une opération de changement de rapport en cours de la boîte de vitesses de véhicule (GE) et en la présence d'une demande de démarrage entraîné ou d'un démarrage lancé du moteur à combustion interne (VM), suivant que l'opération de changement de rapport soit le passage à un rapport supérieur, une rétrogradation, une opération de changement de rapport en traction ou une opération de changement de rapport en propulsion, et aussi suivant la nature du démarrage demandé du moteur à combustion interne (VM), un contrôle est tout d'abord effectué afin de déterminer si l'opération de changement de rapport doit être exécutée, exécutée en partie ou interrompue avant que soit effectué le démarrage entraîné ou le démarrage lancé, et **en ce que** suivant le résultat de ce contrôle, les mesures nécessaires correspondantes pour la poursuite, l'exécution au moins partielle ou l'interruption de l'opération de changement de rapport sont initiées.

2. Procédé selon la revendication 1, **caractérisé en ce que** lors de certaines opérations de changement de rapport ainsi que lors des demandes de démarrage, une instruction de prévention de changement de rapport est tout d'abord activée et l'exécution du démarrage entraîné ou du démarrage lancé demandé du moteur à combustion interne est retardée.

3. Procédé selon la revendication 1 ou 2, **caractérisé en ce que** l'interruption du changement de rapport a lieu lorsqu'une vitesse de rotation actuelle pertinente de la boîte de vitesses correspond encore au moins approximativement à une vitesse de rotation synchrone du rapport actuel ou qu'une limite de phase de changement de rapport applicable n'est pas encore dépassée.

4. Procédé selon l'une des revendications 1 à 3, **caractérisé en ce que** lors d'une opération de changement de rapport composée de plusieurs changements de rapport individuels successifs ou imbriqués et en train de se dérouler, s'il résulte du contrôle qu'une interruption complète du changement de rapport est impossible, le changement de rapport individuel actuel est effectué et tous les changements de rapport supplémentaires associés à ce changement de rapport sont empêchés.

5. Procédé selon l'une des revendications 1 à 4, **caractérisé en ce que** lors d'un passage à un rapport supérieur en cours qui se compose d'un ou plusieurs passages à un rapport supérieur, une interruption du changement de rapport a lieu en cas de demande de démarrage entraîné ou de démarrage lancé du moteur à combustion interne.

6. Procédé selon l'une des revendications 1 à 4, **caractérisé en ce que** lors d'une rétrogradation en cours qui se compose d'une ou plusieurs rétrogradations, une interruption du changement de rapport a lieu en cas de demande de démarrage entraîné du moteur à combustion interne.

7. Procédé selon l'une des revendications 1 à 6, **caractérisé en ce que** dans le cas d'un véhicule équipé d'un élément d'amorçage (K1) intégré dans la boîte de vitesses de véhicule (GE), lors d'une opération de changement de rapport qui se compose d'une ou de plusieurs rétrogradations en propulsion, en présence d'une demande de démarrage entraîné, la boîte de vitesses de véhicule (GE) est tout d'abord rétrogradée jusqu'à ce que l'élément d'amorçage intégré (K1) soit actif dans le rapport engagé.

8. Procédé selon l'une des revendications 1 à 7, **caractérisé en ce que** lors d'une opération de changement de rapport en cours qui se compose d'une ou plusieurs rétrogradations, en présence d'une demande de démarrage lancé, l'opération de changement de rapport et le démarrage lancé qui suit sont exécutés sans retard.

9. Procédé selon l'une des revendications 1 à 8, **caractérisé en ce que** lors d'une opération de changement de rapport en cours qui se compose d'un ou plusieurs passages à un rapport supérieur, en présence d'une demande de démarrage lancé, le moteur à combustion interne (VM) désaccouplé de la chaîne cinématique est démarré par le biais du dispositif de démarrage (ZS) séparé déjà pendant le contrôle de l'interruption du changement de rapport.

10. Procédé selon l'une des revendications 1 à 9, **caractérisé en ce que** lors d'une opération de changement de rapport en cours, un élément de séparation (K0) réalisé sous la forme d'un accouplement de séparation entre la machine électrique (EM) et le moteur à combustion interne (VM) est rempli avec un fluide sous pression et préréglé à un point de contact déjà pendant le contrôle de l'interruption du changement de rapport.
